# EUROPÄISCHE PATENTSCHRIFT

(11) **EP 4 363 186 B1**
(45) Veröffentlichungstag und Bekanntmachung des Hinweises auf die Patenterteilung: **11.06.2025**
(21) Anmeldenummer: 22734560.0
(22) Anmeldetag: 14.06.2022
(51) Int. Cl.: B29C 45/14, B29L 31/30

(54) **SPRITZGIESSVORRICHTUNG FÜR SPRITZGUSSTEILE MIT DEKORELEMENT UND VERFAHREN ZUR HERSTELLUNG EINES SPRITZGUSSTEILS**
INJECTION MOULDING APPARATUS FOR INJECTION-MOULDED PARTS COMPRISING A DECORATIVE ELEMENT, AND METHOD FOR PRODUCING AN INJECTION-MOULDED PART
APPAREIL DE MOULAGE PAR INJECTION POUR PIÈCES MOULÉES PAR INJECTION COMPRENANT UN ÉLÉMENT DÉCORATIF, ET PROCÉDÉ DE PRODUCTION D'UNE PIÈCE MOULÉE PAR INJECTION

(30) Priorität: 01.07.2021 DE 102021117037
(43) Veröffentlichungstag der Anmeldung: 08.05.2024
(73) Patentinhaber: AUDI AG, 85057 Ingolstadt (DE); Georg Kaufmann Formenbau AG, 5453 Busslingen (CH)
(72) Erfinder: DÜRR, Andreas, 92334 Berching (DE); LÖFFLER, Stefan, 85122 Hitzhofen (DE); FOLGHERA, Levi, 5413 Birmenstorf (CH); HÜRLIMANN, Roman, 5620 Bremgarten (CH); IKIC, Roko, 5610 Wohlen (CH)
(74) Vertreter: Müller Hoffmann & Partner
(86) Internationale Anmeldenummer: PCT/EP2022/066123
(87) Internationale Veröffentlichungsnummer: WO 2023/274712

(56) Entgegenhaltungen:
- DE-A1- 102016 226 214
- JP-A- H01 234 218
- US-A- 6 054 087

## Beschreibung

Die Erfindung betrifft eine Spritzgießvorrichtung, die dazu eingerichtet ist, ein mit einem Dekorelement versehenes Spritzgussteil herzustellen, wobei das Dekorelement wenigstens ein Gestaltungselement aufweist. Ferner betrifft die Erfindung ein Verfahren zum Herstellen eines solchen Spitzgussteils.

Eine solche Spritzgießvorrichtung umfasst üblicherweise eine Formkavität, in der das Dekorelement anordenbar ist; ein Formwerkzeug mit wenigstens zwei relativ zueinander beweglichen Werkzeugelementen, insbesondere einem Stempel und einer Matrize, um das Formwerkzeug zu öffnen und zu schließen; eine Füllvorrichtung, die dazu eingerichtet ist, bei geschlossenem oder teilweise geschlossenem Formwerkzeug eine Spritzgussmasse in die Formkavität einzufüllen; und wenigstens eine Fixiervorrichtung, die dazu eingerichtet ist, das Dekorelement in der Formkavität zu fixieren.

Eine solche Spritzgießvorrichtung zur Herstellung eines einseitig mit einem Textil versehenen Spritzgussteils ist beispielsweise aus der DE 100 09 304 A1 bekannt. Bei dieser Spritzgießvorrichtung wird das Textil, nachdem es in zugeschnittener Form einer Bereitstellungseinrichtung entnommen worden ist, im geschlossenen Formwerkzeug mit Spritzgussmasse hinterspritzt und nachfolgend weiter bearbeitet. Auch die EP 2 127 845 A1 zeigt eine solche Spritzgießvorrichtung. Die JP H01 234218 A zeigt eine Spritzgießvorrichtung mit einer Fixiervorrichtung.

Zum technologischen Hintergrund wird ergänzend noch auf die DE 10 2007 041 678 A1 und die DE 199 06 054 A1 hingewiesen.

Die der Erfindung zu Grunde liegende Aufgabe wird darin gesehen, eine Spritzgießvorrichtung und ein Herstellungsverfahren anzugeben, um eine vereinfachte und optimierte Herstellung eines Spritzgussteils mit Dekor und im Dekor vorhandenem Gestaltungselement bzw. Designelement zu ermöglichen.

Diese Aufgabe wird gelöst durch eine Spritzgießvorrichtung und ein Herstellungsverfahren eines Spritzgussteils mit den Merkmalen der jeweiligen unabhängigen Patentansprüche. Vorteilhafte Ausgestaltungen mit zweckmäßigen Weiterbildungen sind in den abhängigen Patentansprüchen angegeben.

Vorgeschlagen wird also eine Spritzgießvorrichtung, die dazu eingerichtet ist, ein mit einem Dekorelement versehenes Spritzgussteil herzustellen, wobei das Dekorelement wenigstens ein Gestaltungselement aufweist, und wobei die Spritzgießvorrichtung umfasst:
eine Formkavität, in der das Dekorelement anordenbar ist;
ein Formwerkzeug mit wenigstens zwei relativ zueinander beweglichen Werkzeugelementen, insbesondere einem Stempel und einer Matrize, um das Formwerkzeug zu öffnen und zu schließen;
eine Füllvorrichtung, die dazu eingerichtet ist, bei geschlossenem oder teilweise geschlossenem Formwerkzeug eine Spritzgussmasse in die Formkavität einzufüllen; und
wenigstens einer Fixiervorrichtung, die dazu eingerichtet ist, das Dekorelement in der Formkavität zu fixieren.
Dabei ist vorgesehen, dass die Spritzgießvorrichtung ferner ein Zuführelement aufweist, das dazu eingerichtet ist, das Dekorelement in das geöffnete Formwerkzeug einzuführen und das Dekorelement relativ zu dem Formwerkzeug in einer Sollposition auszurichten, wobei das Zuführelement dazu eingerichtet ist, das Dekorelement in Abhängigkeit von einer Position oder/und Ausrichtung oder/und Formgebung des wenigstens einen Gestaltungselements auszurichten.

Das Gestaltungselement, das auch Designelement bezeichnet werden kann, kann beispielsweise eine Ziernaht, eine Prägung, ein Emblem oder dergleichen sein. Mittels der hier vorgestellten Spritzgießvorrichtung ist es möglich ein Dekorelement, das nicht nur eine gleichmäßige bzw. gleichartige Oberfläche aufweist, sondern zumindest auch ein Gestaltungselement enthält, optimal in der Spritzgießvorrichtung anzuordnen und auszurichten. Dabei wird als die Position bzw. Form bzw. Ausrichtung des Gestaltungselements als Referenz verwendet, um das Dekorelement vor dem Spritzgießen, insbesondere vor dem Hinterspritzen mit Spritzgussmaterial, korrekt in dem Formwerkzeug zu positionieren. Das Dekorelement kann beispielsweise ein Textil aus natürlichen oder/und künstlichen Fasern, eine (Kunststoff-)Folie, ein Lederstück, ein Kunstlederstück oder dergleichen sein. Das fertige Spritzgussteil, insbesondere ein mit Spritzgussmasse hinterspritztes Dekorelement kann Teil einer Verkleidung eines Innenraums eines Kraftfahrzeugs sein, beispielsweise im Bereich eines Armaturenbretts, einer Türverkleidung, einer Handauflage, eines Staufachdeckels und dergleichen.

Der hier verwendete Begriff Gestaltungselement umfasst, wie bereits oben angedeutet, verschiedene Ausgestaltungen von insbesondere sicht- und wahrnehmbaren Elementen, wie eine Ziernaht, eine Prägung, ein Emblem oder dergleichen. Eine Ziernaht oder Naht könnte aufgrund ihrer Funktion zum Verbinden von Teilen des Dekorelements auch als Funktionselement bezeichnet werden, wird aber im Rahmen dieser Anmeldung auch von dem Begriff Gestaltungselement umfasst.

Die Spritzgießvorrichtung kann eine erste Fixiervorrichtung aufweisen, die dazu eingerichtet ist, das Dekorelement außerhalb eines Bereichs, der das Gestaltungselement aufweist, zu fixieren.

Dabei kann die die erste Fixiervorrichtung wenigstens ein stempelseitiges und wenigstens ein matrizenseitiges erstes Fixierelement aufweisen, die unabhängig von den Werkzeugelementen bewegbar sind.

Mittels einer solchen ersten Fixiervorrichtung ist es möglich, das im Formwerkzeug in der Sollposition ausgerichtete Dekorelement in dieser Position zu halten bzw. zu fixieren bis das Formwerkzeug geschlossen ist und zumindest ein Teil der Spritzgießmasse eingespritzt worden ist.

Die Spritzgießvorrichtung kann eine zweite Fixiervorrichtung aufweisen, die dazu eingerichtet ist, das Dekorelement im Bereich des Gestaltungselements zu fixieren.

Dabei kann die zweite Fixiervorrichtung einen dem Dekorelement zugewandten Gegenkonturabschnitt aufweisen, der dazu eingerichtet ist, mit einem Konturabschnitt des Gestaltungselements das Dekorelement formschlüssig auszurichten.

Mittels einer solchen zweiten Fixiervorrichtung ist es möglich, das im Formwerkzeug in der Sollposition ausgerichtete Dekorelement in dieser Position zu halten bzw. zu fixieren bis das Formwerkzeug geschlossen ist und zumindest ein Teil der Spritzgießmasse eingespritzt worden ist. Der Gegenkonturabschnitt kann auch beim Ausrichten des Dekorelements in der Sollposition bei geöffnetem Formwerkzeug bereits genutzt werden, auch wenn die zweite Fixiervorrichtung noch nicht eine Fixier- bzw. Halteposition eingestellt worden ist.

Der zweiten Fixiervorrichtung kann eine Vakuumeinrichtung zugeordnet sein, die insbesondere dazu eingerichtet ist, das ausgerichtete Dekorelement an dem Stempel zu fixieren und durch Unterdruck anzusaugen. Dabei kann die Vakuumeinrichtung einen Einsatz aufweisen, der den Gegenkonturabschnitt aufweist. Durch den Einsatz mit dem Gegenkonturabschnitt ist es möglich, das Dekorelement in der Sollposition auszurichten, bevor die Vakuumeinrichtung aktiviert wird, um das Dekorelement zu fixieren.

Alternativ kann die zweite Fixiervorrichtung wenigstens ein stempelseitiges und wenigstens ein matrizenseitiges zweites Fixierelement aufweisen, die unabhängig von den Werkzeugelementen bewegbar sind. Dabei kann das matrizenseitige zweite Fixierelement den Gegenkonturabschnitt aufweisen.

Durch ein matrizenseitiges und ein stempelseitiges Fixierelement kann das Dekorelement im Bereich des Gestaltungselements optimal in der Sollposition gehalten werden bis das Formwerkzeug geschlossen ist und zumindest ein Teil der Spritzgießmasse eingespritzt worden ist. Der Gegenkonturabschnitt des stempelseitigen Fixierelements kann auch beim Ausrichten des Dekorelements in der Sollposition bei geöffnetem Formwerkzeug bereits genutzt werden, auch wenn die zweite Fixiervorrichtung noch nicht eine Fixier- bzw. Halteposition eingestellt worden ist.

Bei der Spritzgießvorrichtung kann das Zuführelement mehrere Halteelemente, insbesondere Nadelgreifer, aufweisen, die dazu eingerichtet sind, das Dekorelement zu transportieren und in die Formkavität einzuführen.

Das Zuführelement kann ein elastisches Stützelement aufweisen, das dazu eingerichtet ist, das Gestaltungselement des Dekorelements insbesondere beim Ausrichten abzustützen. Dabei kann das elastische Stützelement insbesondere von der zu hinterspritzenden Seite des Dekorelements das Gestaltungselement abstützen. Durch das elastische Stützelement wird das Ausrichten des Dekorelements in Abhängigkeit von dem Gestaltungselement verbessert, insbesondere wird die formschlüssige Positionierung zwischen einem Gegenkonturabschnitt der Fixiervorrichtung und einem korrespondierenden Konturabschnitt des Gestaltungselements vereinfacht.

Bei der Spritzgießvorrichtung kann die Fixiervorrichtung dazu eingerichtet sein, das Dekorelement beim Schließen der Werkzeugelemente und beim Einfüllen von Spritzgussmasse derart zu fixieren, dass die Spritzgussmasse das Dekorelement nur von einer Seite beaufschlagt wird. Mit anderen Worten kann das Dekorelement beispielweise an der Matrize anliegen und auf der Seite des Stempels wird Spritzgussmasse eingefüllt, die das Dekorelement dann einseitig beaufschlagt.

Die Spritzgießvorrichtung kann ferner wenigstens eine Schneidvorrichtung aufweisen, die dazu eingerichtet ist, das in der Formkavität aufgenommene und in der Sollposition ausgerichtete Dekorelement zuzuschneiden, insbesondere dessen Randkontur zuzuschneiden

Die Spritzgießvorrichtung kann ferner wenigstens eine Umbugvorrichtung aufweisen, die dazu eingerichtet ist, an dem in der Formkavität aufgenommenen und in der Sollposition ausgerichteten Dekorelement entlang von wenigstens einem seiner Ränder einen Umbug auszubilden.

Somit kann mit der Spritzgießvorrichtung zusätzlich zu dem eigentlichen Spritzgießen auch ein Zuschneiden oder/und Ausbilden von wenigstens einem Umbug durchgeführt werden, so dass ein Spritzgussteil mit Dekorelement und Gestaltungselement in der gleichen Vorrichtung effizient und optimiert hergestellt werden kann.

Ein Verfahren zum Herstellen eines Spitzgussteils, das ein Dekorelement mit wenigstens einem Gestaltungselement aufweist, mit einer oben beschriebenen Spritzgießvorrichtung, umfasst folgende Schritte:
Einführen eines Dekorelements in die Formkavität bei geöffnetem Formwerkzeug;
Ausrichten des Dekorelements relativ zu dem Formwerkzeug in einer Sollposition zumindest teilweise unter Verwendung des Zuführelements, wobei das Ausrichten des Dekorelements in der Sollstellung in Abhängigkeit von einer Position oder/und Ausrichtung oder/und Formgebung des wenigstens einen Gestaltungselements durchgeführt wird;
Fixieren des Dekorelements in der Sollposition;
Schließen oder teilweises Schließen des Formwerkzeugs;
Einspritzen, insbesondere Hinterspritzen, von Spritzgussmasse, derart dass die Spritzgussmasse das Dekorelement nur von einer Seite beaufschlagt.

Bei dem Verfahren kann ein formschlüssiges Ausrichten in Bezug auf einen Konturabschnitt des Gestaltungselements des Dekorelements mittels einer alternierenden, insbesondere schwingenden Bewegung des Zuführelements erfolgen. Diese alternierende Bewegung ist eine eher kleinräumige Bewegung im Bereich von wenigen Millimetern oder Zehntelmillimetern. Dabei können der Konturabschnitt des Gestaltungselements und ein Gegenkonturabschnitt im Formwerkzeug optimal zueinander ausgerichtet werden, wobei die alternierende Bewegung die Herstellung der formschlüssigen Ausrichtung unterstützt.

Insbesondere ergibt sich bei der alternierenden Bewegung auch eine relative Bewegung des elastischen Stützelements. Durch eine solche Relativbewegung des elastischen Stützelements wird das Ausrichten des Dekorelements in Abhängigkeit von dem Gestaltungselement verbessert, insbesondere auch sichergestellt.

Bei dem Verfahren kann das in der Formkavität eingeführte und in der Sollposition fixierte Dekorelement in der Formkavität vor oder nach dem Einspritzen von Spritzgussmasse bearbeitet werden, insbesondere kann es zugeschnitten werden oder/und es kann wenigstens ein Umbug ausgebildet werden.

Bei dem Verfahren kann das zu verarbeitende Dekorelement
eine zumindest teilweise flexible oder feste Struktur aufweisen; oder/und
eine geschäumte Materialschicht aufweisen; oder/und
eine Textilschicht oder eine Kunststoffschicht oder eine Lederschicht aufweisen; oder/und
aus mehreren zusammengesetzten, insbesondere zusammengenähten Dekorstücken gebildet sein.

Weitere Vorteile und Einzelheiten der Erfindung ergeben sich aus der nachfolgenden Beschreibung von Ausführungsformen unter Bezugnahme auf die Figuren. Dabei zeigt:
- Fig. 1: eine vereinfachte und schematische Darstellung einer Spritzgießvorrichtung in einem anfänglichen Zustand vor dem Herstellen eines Spritzgussteils mit Dekorelement;
- Fig. 2: die Spritzgießvorrichtung der Fig. 1 in einem Zustand bzw. Verfahrensschritt beim Herstellen eines Spritzgussteils mit Dekorelement;
- Fig. 3: die Spritzgießvorrichtung der Fig. 1 in einem Zustand bzw. Verfahrensschritt (Ausrichten) beim Herstellen eines Spritzgussteils mit Dekorelement;
- Fig. 4: die Spritzgießvorrichtung der Fig. 1 in einem Zustand bzw. Verfahrensschritt (Fixieren) beim Herstellen eines Spritzgussteils mit Dekorelement;
- Fig. 5: die Spritzgießvorrichtung der Fig. 1 in einem Zustand bzw. Verfahrensschritt (Entfernen Zuführelement) beim Herstellen eines Spritzgussteils mit Dekorelement;
- Fig. 6: die Spritzgießvorrichtung der Fig. 1 in einem Zustand bzw. Verfahrensschritt (Schließen Formwerkzeug) beim Herstellen eines Spritzgussteils mit Dekorelement;
- Fig. 7: die Spritzgießvorrichtung der Fig. 1 in einem Zustand bzw. Verfahrensschritt (Hinterspritzen) beim Herstellen eines Spritzgussteils mit Dekorelement;
- Fig. 8: die Spritzgießvorrichtung der Fig. 1 in einem Zustand bzw. Verfahrensschritt (Entformen/Entnehmen) beim Herstellen eines Spritzgussteils mit Dekorelement;
- Fig. 9: eine vereinfachte und schematische Darstellung einer weiteren Spritzgießvorrichtung in einem anfänglichen Zustand vor dem Herstellen eines Spritzgussteils mit Dekorelement;
- Fig. 10: die weitere Spritzgießvorrichtung der Fig. 9 in einem Zustand bzw. Verfahrensschritt (Ausrichten) beim Herstellen eines Spritzgussteils mit Dekorelement;
- Fig. 11: die weitere Spritzgießvorrichtung der Fig. 9 in einem Zustand bzw. Verfahrensschritt (Fixieren) beim Herstellen eines Spritzgussteils mit Dekorelement;
- Fig. 12: die weitere Spritzgießvorrichtung der Fig. 9 in einem Zustand bzw. Verfahrensschritt (Fixieren) beim Herstellen eines Spritzgussteils mit Dekorelement;
- Fig. 13: die weitere Spritzgießvorrichtung der Fig. 9 in einem Zustand bzw. Verfahrensschritt (Zuführelement entfernen) beim Herstellen eines Spritzgussteils mit Dekorelement;
- Fig. 14: die weitere Spritzgießvorrichtung der Fig. 9 in einem Zustand bzw. Verfahrensschritt (Schließen Formwerkzeug) beim Herstellen eines Spritzgussteils mit Dekorelement;
- Fig. 15: die weitere Spritzgießvorrichtung der Fig. 9 in einem Zustand bzw. Verfahrensschritt (geschlossenes Formwerkzeug) beim Herstellen eines Spritzgussteils mit Dekorelement;
- Fig. 16: die weitere Spritzgießvorrichtung der Fig. 9 in einem Zustand bzw. Verfahrensschritt (Hinterspritzen) beim Herstellen eines Spritzgussteils mit Dekorelement;
- Fig. 17: die weitere Spritzgießvorrichtung der Fig. 9 in einem Zustand bzw. Verfahrensschritt (Entformen/Entfernen) beim Herstellen eines Spritzgussteils mit Dekorelement;

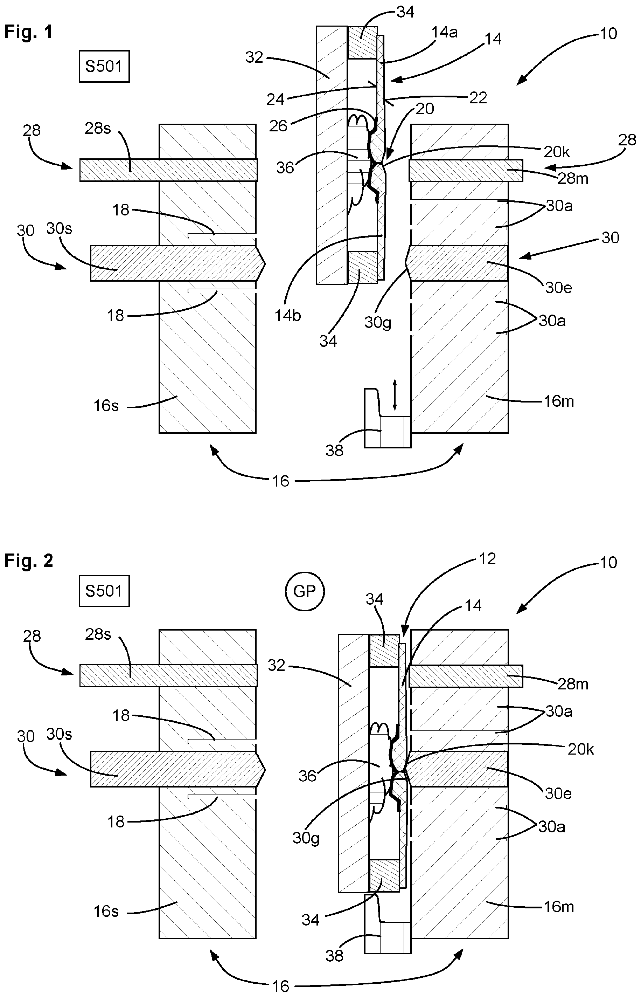

In den Fig. 1 bis 8 ist schematisch und vereinfacht eine Spritzgießvorrichtung 10 gezeigt. Die Spritzgießvorrichtung 10 weist eine Formkavität 12 auf in der ein zu verarbeitendes Dekorelement 14 anordenbar ist. Weiter umfasst die Spritzgießvorrichtung 10 ein Formwerkzeug 16 mit wenigstens zwei relativ zueinander beweglichen Werkzeugelementen 16m, 16s, insbesondere einem Stempel 16s und einer Matrize 16m, um das Formwerkzeug 10 zu öffnen und zu schließen. Ferner weist die Spritzgießvorrichtung 10 eine Füllvorrichtung 18, die dazu eingerichtet ist, bei geschlossenem Formwerkzeug 16 eine Spritzgussmasse in die Formkavität 12 einzufüllen. Die Füllvorrichtung 18 ist vereinfacht als Kanalabschnitt dargestellt, durch den Spitzgussmasse in die Formkavität 12 zugeführt werden kann.

Das mittels der Spritzgießvorrichtung 10 zu verarbeitende Dekorelement 14 umfasst wenigstens ein Gestaltungselement 20. Das Gestaltungselement 20 kann eine Ziernaht, eine Prägung, ein im Dekorelement integriertes Emblem oder dergleichen sein. In der nachfolgenden Beschreibung wird als nicht einschränkendes Beispiel eines Gestaltungselements 20 eine Ziernaht betrachtet.

Das Dekorelement 14 ist im gezeigten Beispiel aus mehreren zusammengesetzten, insbesondere zusammengenähten Dekorstücken 14a, 14b gebildet. In Bezug auf die Figuren weist das Dekorelement 14 auf der rechten Seite eine Vorderseite 22 auf, die später einem Innenraum eines Kraftfahrzeugs zugewandt ist. Die linke Seite des Dekorelements 14 bildet eine Rückseite 24, die nach erfolgtem Spritzgießen mit der Spritzgussmasse materialschlüssig verbunden ist.

Im Bereich des Gestaltungselements 20 bzw. der Ziernaht 20 kann auf der Rückseite des Dekorelements 14 ein Dichtelement 26 angeordnet, das beim Einspritzen von Spritzgussmasse ein Durchdringen von Spritzgussmasse durch die Ziernaht 20 verhindert. Ist das Gestaltungselement 20 nicht als Ziernaht ausgebildet, sondern beispielsweise als Prägung oder Emblem, die bzw. das einstückig oder/und materialschlüssig mit dem Dekorelement 14 verbunden ist, kann das Dichtelement 26 ggf. entfallen.

Die Spritzgießvorrichtung 10, die in den Fig. 1 bis 8 dargestellt ist, umfasst eine erste Fixiervorrichtung 28, die dazu eingerichtet ist, das Dekorelement 14 außerhalb eines Bereichs, der das Gestaltungselement 20 bzw. die Ziernaht 20 aufweist, zu fixieren. Die erste Fixiervorrichtung 28 umfasst im gezeigten Beispiel relativ zu den Werkzeugelementen 16m, 16s bewegliche Klemmelemente 28m, 28s, die dazu eingerichtet sind, das Dekorelement 14 klemmend zu beaufschlagen.

Ferner umfasst die Spritzgießvorrichtung 10 eine zweite Fixiervorrichtung 30, die stempelseitig als Vakuumeinrichtung 30a und matrizenseitig als Klemmelement 30m ausgeführt ist. Von der Vakuumeinrichtung 30a sind vereinfacht und beispielhaft mehrere Vakuumleitungen 30a dargestellt.

Im Beispiel der Fig. 1 bis 8 umfasst die Vakuumeinrichtung 30s auch eine Art Einsatz 30e, der dazu eingerichtet ist, in Kontakt mit dem Gestaltungselement 20 zu kommen, wenn das Dekorelement 14 in die Formkavität 12 eingeführt ist.

Die Spritzgießvorrichtung 10 umfasst ferner ein Zuführelement 32 auf, das dazu eingerichtet ist, das Dekorelement 14 in das geöffnete Formwerkzeug 16 einzuführen. Das Zuführelement 32 ist ferner dazu eingerichtet, das Dekorelement 14 relativ zu dem Formwerkzeug 16 in einer Sollposition auszurichten, was nachfolgend noch genauer beschrieben wird.

Das Zuführelement 32 kann beispielsweise mehrere Halteelemente 34 aufweisen, insbesondere Nadelgreifer, die dazu eingerichtet sind, das Dekorelement 14 zu transportieren und in die Formkavität 12 einzuführen. In dem Beispiel der Fig. 1 bis 8 weist das Zuführelement 32 ein elastisches Stützelement 36 auf, das dazu eingerichtet ist, das Gestaltungselement, bzw. die Ziernaht 20 des Dekorelements 14 abzustützen, insbesondere beim Ausrichten des Dekorelements 14 relativ zu dem Formwerkzeug 16, was nachfolgend noch genauer beschrieben wird.

Die Spritzgießvorrichtung 10 kann ferner auch eine hier nicht dargestellte Schneidvorrichtung aufweisen, die dazu eingerichtet ist, das in der Formkavität 12 aufgenommene und in der Sollposition ausgerichtete Dekorelement 14 zuzuschneiden, insbesondere dessen Randkontur zuzuschneiden.

Ferner kann die Spritzgießvorrichtung 10 wenigstens eine Umbugvorrichtung 38 aufweisen, die dazu eingerichtet ist, an dem in der Formkavität 12 aufgenommenen und in der Sollposition ausgerichteten Dekorelement 14 entlang von wenigstens einem seiner Ränder einen Umbug auszubilden, was nachfolgend noch genauer beschrieben wird. Im gezeigten Beispiel der Fig. 1 bis 8 ist die Umbugvorrichtung 38 an der Matrize 16m angeordnet und kann relativ zu dieser in Vertikalrichtung bewegt werden, was durch den Doppelpfeil oberhalb der Umbugvorrichtung 38 in Fig. 1 angedeutet ist.

Basierend auf der vorherigen Beschreibung des strukturellen Aufbaus der Spritzgießvorrichtung 10 wird nachfolgend deren Einsatz zur Herstellung eines Spritzgussteils mit einem Dekorelement 14 und einem Gestaltungselement 20 beschrieben. Die nachfolgende Beschreibung unter Bezugnahme auf die Fig. 1 bis 8 kann in der Gesamtschau auch als Verfahren zur Herstellung eines Spritzgussteils bezeichnet werden. Es wird darauf hingewiesen, dass aus Gründen der Übersichtlichkeit nicht in jeder der Figuren 1 bis 8 alle Bezugszeichen enthalten sind. Falls in einer Figur ein Bezugszeichen nicht dargestellt sein sollte, findet sich das entsprechende Bezugszeichen in jedem Fall aber in der Fig. 1.

Gemäß Fig. 1 und Fig. 2 wird das Dekorelement 14 mittels des Zuführelements 32 zu dem geöffneten Formwerkzeug 16 transportiert und in die Formkavität 12 eingeführt (Schritt S501). Fig. 2 zeigt dabei eine näherungsweise Positionierung bzw. Grobpositionierung des Dekorelements 14 in Relation zu dem Formwerkzeug 16, insbesondere dem Stempel 16s bzw. dem Einsatz 30e der Vakuumeinrichtung 30.

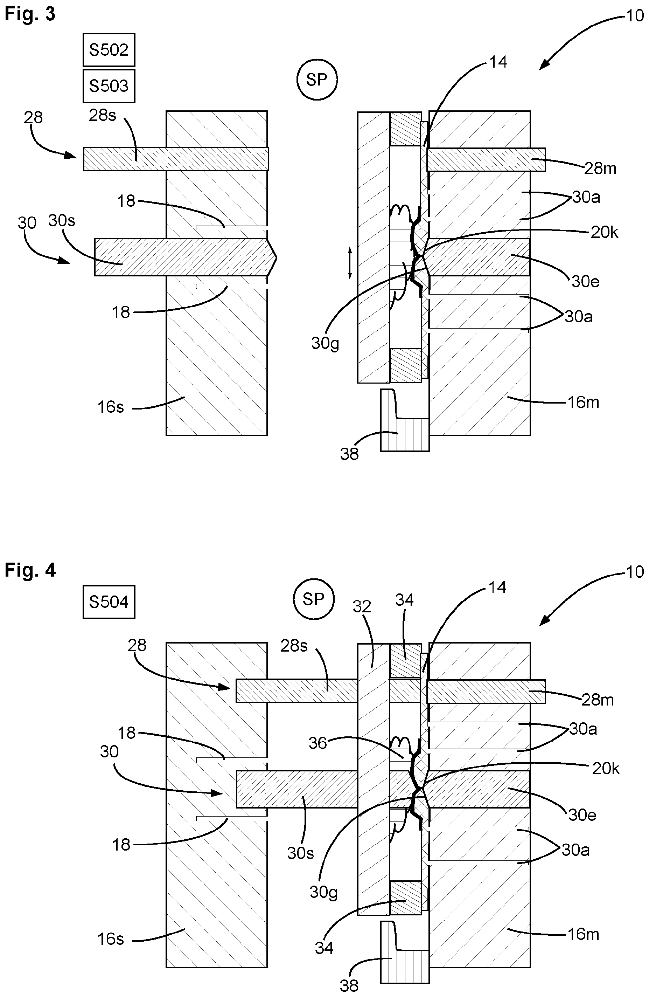

Das Gestaltungselement 20 bzw. die Ziernaht 20 weist eine dem Stempel 16s zugewandte Kontur 20k auf. Diese Kontur 20k umfasst im Beispiel der Ziernaht 20 eine Art Vertiefung. Der Einsatz 30e der Vakuumeinrichtung 30 umfasst einen dem Dekorelement 14 zugwandten Gegenkonturabschnitt 30g
Die Ausrichtung des Dekorelements in eine in Fig. 3 dargestellte Sollposition SP erfolgt in Abhängigkeit von der Position oder/und Ausrichtung oder/und Formgebung des Gestaltungselements bzw. der Ziernaht 20 (Schritt S502). Dabei kann ein formschlüssiges Ausrichten in Bezug auf den Konturabschnitt 20k des Gestaltungselements 20 des Dekorelements 14 mittels einer alternierenden, insbesondere schwingenden Bewegung des Zuführelements 32 erfolgen (S503). Dabei wird das formschlüssige Ausrichten auch durch das elastische Stützelement 36 unterstützt, das die Ziernaht 20 bzw. die Kontur 20k in Richtung der Gegenkontur 30g drückt.

Mit anderen Worten führt das Zuführelement 32 einen geringfügige Hubbewegung, insbesondere eine im Wesentlichen vertikale Hin- und Herbewegung, aus, so dass die Ziernaht 20 mit ihrer Kontur 20k bzw. der Vertiefung formschlüssig am Gegenkonturabschnitt 30g des Einsatzes 30e anliegt bzw. in Eingriff steht. Hierdurch wird das Dekorelement 14 im gezeigten Beispiel in insbesondere Abhängigkeit von der Formgebung der Ziernaht 20 ausgerichtet und in seiner Sollposition festgelegt. Die ausgeführte Hubbewegung ist nicht auf eine vertikale Hin- und Herbewegung beschränkt, es ist auch denkbar, dass eine elliptische oder kreisförmige Bewegung durchgeführt wird. Die geringfügige Hubbewegung kann also neben einer vertikalen Bewegungskomponente auch eine horizontale Bewegungskomponenten aufweisen. Der Gegenkonturabschnitt 30g kann in diesem Beispiel auch als Nahtzwickel bzw. Nahtspickel bezeichnet werden.

Gemäß einen Schritt S504 erfolgt dann ein Fixieren des Dekorelements 14 in der Sollposition SP, was in der Fig. 4 gezeigt ist.

Bei der Spritzgießvorrichtung 10 der Fig. 4 erfolgt das Fixieren des Dekorelements 14 insbesondere dadurch, dass die Vakuumeinrichtung 30 aktiviert wird, so dass das Dekorelement 14 in seiner ausgerichteten Sollposition gegen den Stempel 16 gedrückt bzw. gesaugt wird. Ergänzend wird die erste Fixiereinrichtung 28 geschlossen, in dem das stempelseitige Klemmelement 28s zum matrizenseitigen Klemmelement 28m bewegt wird, so dass das Dekorelement 14 zwischen den beiden Klemmelementen 28m, 28s gehalten und fixiert ist. Ferner wird noch das stempelseitige Klemmelement 30s der zweiten Fixiereinrichtung 30 in Richtung des Einsatzes 30e der Vakuumeinrichtung 30 bewegt, so dass das Dekorelement 14 insbesondere auch im Bereich des Gestaltungselements 20 bzw. der Ziernaht 20 gehalten bzw. fixiert ist.

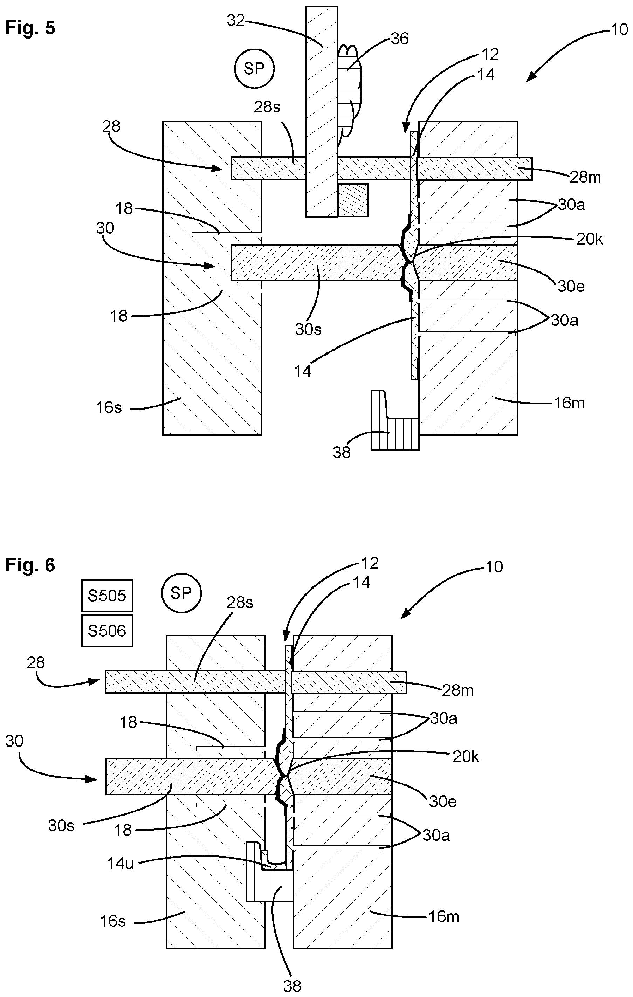

In der Fig. 5 ist dargestellt, dass nach dem Fixieren des Dekorelements 14 in der Formkavität 12 das Zuführelement 32 von dem Dekorelement 14 gelöst werden kann und aus der Formkavität 12 entfernt bzw. ausgefahren werden kann. In den nachfolgenden Figuren 6 bis 8 ist das Zuführelement 32 daher nicht mehr dargestellt, auch wenn es bei einer konkreten Umsetzung ggf. noch in der Näher des Formwerkzeugs 16 vorhanden bzw. sichtbar sein kann.

Gemäß Fig. 6 wird in einem Schritt S505 das Formwerkzeug 16 geschlossen. Dabei wird der Stempel 16s relativ zu den Fixierelementen 28s und 30s zu der Matrize 16m bewegt. Ferner kann vor oder bei der Durchführung dieses Schritts auch die Umbugvorrichtung 38 in Richtung des unteren Rands des Dekorelements 14 bewegt werden (S506), so dass sich am Dekorelement 14 ein Umbug 14u ausbildet. Ergänzend ist es auch denkbar, dass das Dekorelement 14 in dem Formwerkzeug 16 zugeschnitten wird, was aber nicht in den Figuren dargestellt ist.

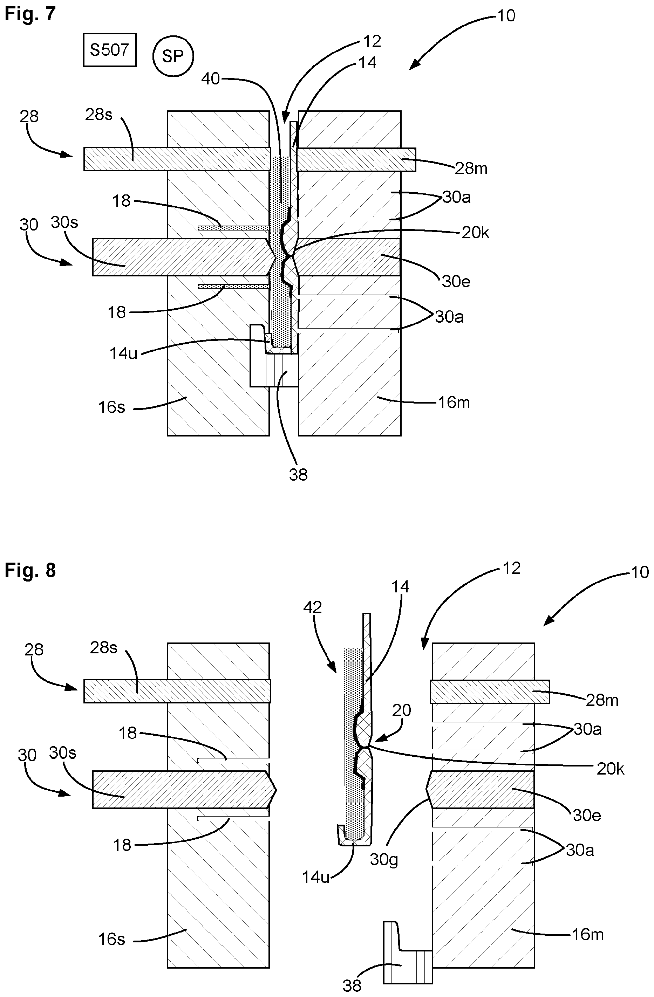

In Fig. 7 ist ein Schritt S507 dargestellt, bei dem Spritzgussmasse 40 in die Formkavität 12 eingespritzt wird. Dabei erfolgt ein Hinterspritzen des Dekorelements 14, so dass dieses auf seiner Rückseite 24 mit der Spritzgussmasse 40 in Kontakt kommt bzw. materialschlüssig mit dieser verbunden wird. Beim Einspritzen von Spritzgussmasse 40 können die Klemmelemente 28m bzw. 30m gelöst bzw. wegbewegt werden. Eine solche Bewegung kann dabei aktiv (geregelt bzw. gesteuert) oder passiv (über den Schmelzdruck) erfolgen.

Fig. 8 zeigt die Entnahme des fertigen Spritzgussteils 42 aus dem Formwerkzeug 16 bzw. der Spritzgießvorrichtung 10. Dabei weist das fertige Spritzgussteil 42 das Dekorelement 14 mit Gestaltungselement 20 bzw. Ziernaht 20 auf.

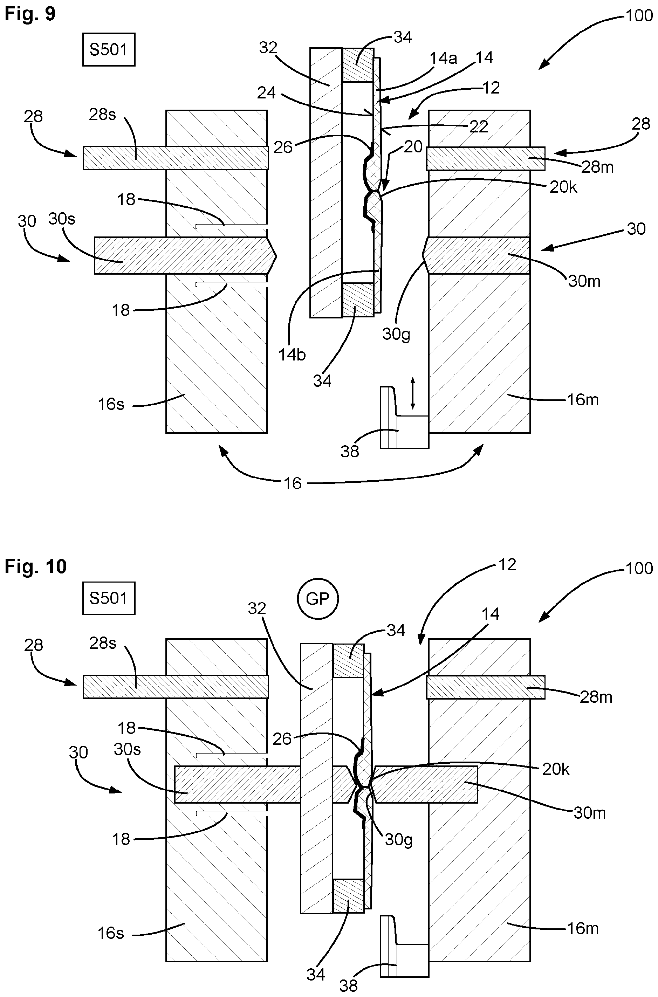

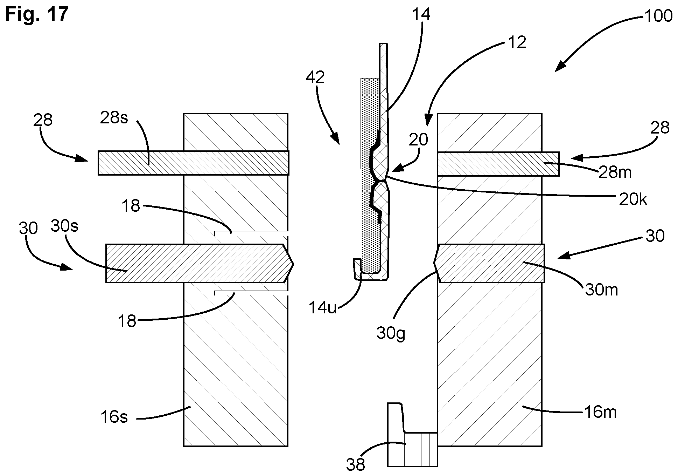

Fig. 9 zeigt ein Beispiel einer weiteren Spritzgießvorrichtung 100, mit der ebenfalls ein Spritzgussteil 42 (Fig. 17) hergestellt werden kann. In den Fig. 9 bis 17 sind korrespondierende Bauteile der weiteren Spritzgießvorrichtung 10 mit den gleichen Bezugszeichen gekennzeichnet, wie in Bezug auf die Spritzgießvorrichtung 10 der Fig. 1 bis 8. Entsprechend wird in Bezug auf die Fig. 9 bis 17 darauf hingewiesen, dass die prinzipielle Vorgehens- und Funktionsweise der Spritzgießvorrichtung 100 gleich ist, wie oben unter Bezugnahme auf die Fig. 1 bis 8 beschrieben.

Im Unterschied zu der bereits beschriebenen Spritzgießvorrichtung 10 weist die Spritzgießvorrichtung 100 keine Vakuumeinrichtung 30 (Fig. 1) auf. Die zweite Fixiereinrichtung 30 umfasst bei dieser Spritzgießvorrichtung 100 ein matrizenseitiges Klemmelement 30m, das relativ zur Matrize 16m beweglich ist. Das Klemmelement 30m weist an seinem dem Dekorelement 14 zugwandten Ende den Gegenkonturabschnitt 30g auf.

Ferner weist das Zuführelement 32 für die Spritzgießvorrichtung 100 kein elastisches Stützelement 36 (Fig. 1) auf, was aufgrund der beiden Klemmelemente 30m, 30s auch nicht zwingend erforderlich ist.

Alle übrigen Bauteile der Spritzgießvorrichtung 100 sind gleich wie bei der Spritzgießvorrichtung 10 der Fig. 1 bis 8, so dass diesbezüglich auf die obige Beschreibung Bezug genommen wird.

Basierend auf der vorherigen Beschreibung des strukturellen Aufbaus der weiteren Spritzgießvorrichtung 100 wird nachfolgend deren Einsatz zur Herstellung eines Spritzgussteils mit einem Dekorelement 14 und einem Gestaltungselement 20 beschrieben. Die nachfolgende Beschreibung unter Bezugnahme auf die Fig. 9 bis 17 kann in der Gesamtschau auch als Verfahren zur Herstellung eines Spritzgussteils bezeichnet werden. Es wird darauf hingewiesen, dass aus Gründen der Übersichtlichkeit nicht in jeder der Figuren 9 bis 17 alle Bezugszeichen enthalten sind. Falls in einer Figur ein Bezugszeichen nicht dargestellt sein sollte, findet sich das entsprechende Bezugszeichen in jedem Fall aber in der Fig. 9 oder der Fig. 1.

Gemäß Fig. 9 und Fig. 10 wird das Dekorelement 14 mittels des Zuführelements 32 zu dem geöffneten Formwerkzeug 16 transportiert und in die Formkavität 12 eingeführt (Schritt S501). Fig. 10 zeigt dabei eine näherungsweise Positionierung bzw. Grobpositionierung GP des Dekorelements 14 in Relation zu dem Formwerkzeug 16, insbesondere der Matrize 16m bzw. dem matrizenseitigen Klemmelement 30m, das in Richtung des Dekorelements 14 ausgefahren worden ist (Fig. 10).

Das Gestaltungselement 20 bzw. die Ziernaht 20 weist die der Matrize 16m zugewandte Kontur 20k auf. Diese Kontur 20k umfasst im Beispiel der Ziernaht 20 eine Art Vertiefung. Das Klemmelement 30m umfasst den dem Dekorelement 14 zugwandten Gegenkonturabschnitt 30g.

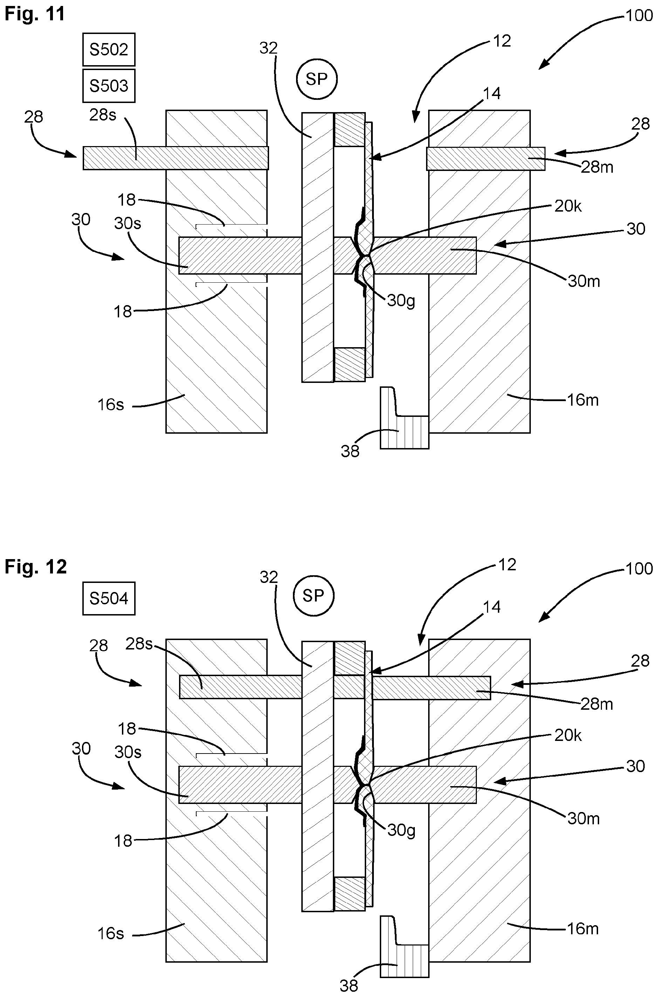

Die Ausrichtung des Dekorelements in eine in Fig. 11 dargestellte Sollposition SP erfolgt in Abhängigkeit von der Position oder/und Ausrichtung oder/und Formgebung des Gestaltungselements bzw. der Ziernaht 20 (Schritt S502). Dabei kann ein formschlüssiges Ausrichten in Bezug auf den Konturabschnitt 20k des Gestaltungselements 20 des Dekorelements 14 mittels einer alternierenden, insbesondere schwingenden Bewegung des Zuführelements 32 erfolgen (S503). Dabei wird das formschlüssige Ausrichten auch durch das stempelseitige Klemmelement 30s unterstützt, das die Ziernaht 20 bzw. die Kontur 20k von der Rückseite 24 her abstützt.

Mit anderen Worten führt das Zuführelement 32 eine geringfügige Hubbewegung, insbesondere eine im Wesentlichen vertikale Hin- und Herbewegung, aus, so dass die Ziernaht 20 mit ihrer Kontur 20k bzw. der Vertiefung formschlüssig am Gegenkonturabschnitt 30g des Klemmelements 30s anliegt bzw. in Eingriff steht. Hierdurch wird das Dekorelement 14 im gezeigten Beispiel insbesondere in Abhängigkeit von der Formgebung der Ziernaht 20 ausgerichtet und in seiner Sollposition festgelegt. Der Gegenkonturabschnitt 30g kann in diesem Beispiel auch als Nahtzwickel bzw. Nahtspickel bezeichnet werden.

Gemäß einen Schritt S504 erfolgt dann ein Fixieren des Dekorelements 14 in der Sollposition SP, was in der Fig. 12 gezeigt ist.

Bei der Spritzgießvorrichtung 100 der Fig. 12 erfolgt das Fixieren des Dekorelements 14 insbesondere dadurch, dass die Klemmelemente 30s, 30m geschlossen werden, so dass das Dekorelement 14 zwischen ihnen klemmend beaufschlagt und gehalten ist. Ergänzend wird die erste Fixiereinrichtung 28 geschlossen, in dem das matrizenseitige Klemmelement 28m zum stempelseitigen Klemmelement 28s bewegt wird, so dass das Dekorelement 14 zwischen den beiden Klemmelementen 28m, 28s gehalten und fixiert ist. Somit ist das Dekorelement 14 insbesondere auch im Bereich des Gestaltungselements 20 bzw. der Ziernaht 20 gehalten bzw. fixiert.

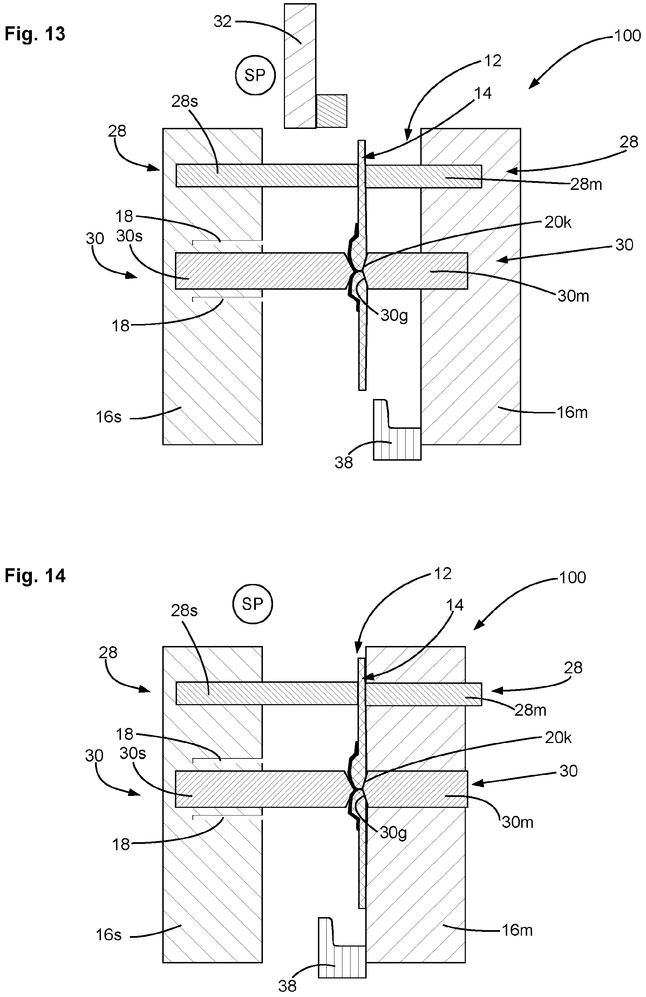

In der Fig. 13 ist dargestellt, dass nach dem Fixieren des Dekorelements 14 in der Formkavität 12 das Zuführelement 32 von dem Dekorelement 14 gelöst werden kann und aus der Formkavität 12 entfernt bzw. ausgefahren werden kann. In den nachfolgenden Figuren 14 bis 17 ist das Zuführelement 32 daher nicht mehr dargestellt, auch wenn es bei einer konkreten Umsetzung ggf. noch in der Näher des Formwerkzeugs 16 vorhanden bzw. sichtbar sein kann.

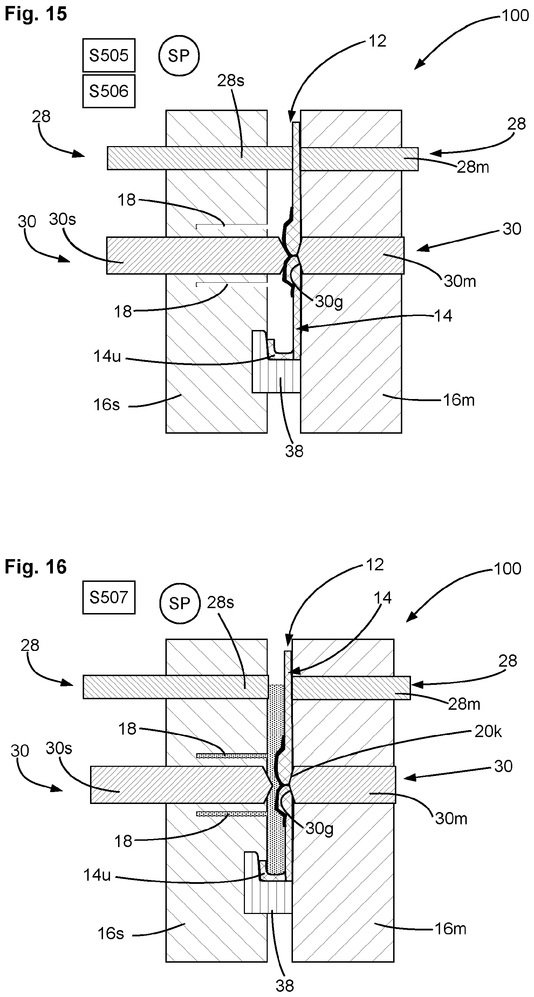

Gemäß Fig. 15 wird in einem Schritt S505 das Formwerkzeug 16 geschlossen. Dabei wird die Matrize 16m relativ zu den Fixierelementen 28m und 30m zu dem Stempel 16s bewegt. Ferner kann vor oder bei der Durchführung dieses Schritts auch die Umbugvorrichtung 38 in Richtung des unteren Rands des Dekorelements 14 bewegt werden (S506), so dass sich am Dekorelement 14 ein Umbug 14u ausbildet. Ergänzend ist es auch denkbar, dass das Dekorelement 14 in dem Formwerkzeug 16 zugeschnitten wird, was aber nicht in den Figuren dargestellt ist.

In Fig. 16 ist ein Schritt S507 dargestellt, bei dem Spritzgussmasse 40 in die Formkavität 12 eingespritzt wird. Dabei erfolgt ein Hinterspritzen des Dekorelements 14, so dass dieses auf seiner Rückseite 24 mit der Spritzgussmasse 40 in Kontakt kommt bzw. materialschlüssig mit dieser verbunden wird. Beim Einspritzen von Spritzgussmasse 40 können die Klemmelemente 28s bzw. 30s gelöst bzw. wegbewegt werden. Wie bereits oben erwähnt, kann eine solche Bewegung aktiv (geregelt bzw. gesteuert) oder passiv (über den Schmelzdruck) erfolgen.

Fig. 17 zeigt die Entnahme des fertigen Spritzgussteils 42 aus dem Formwerkzeug 16 bzw. der Spritzgießvorrichtung 10. Dabei weist das fertige Spritzgussteil 42 das Dekorelement 14 mit Gestaltungselement 20 bzw. Ziernaht 20 auf.

Mittels der hier vorgestellten Spritzgießvorrichtungen 10, 100 ist es möglich ein Dekorelement 14, das nicht nur eine gleichmäßige bzw. gleichartige Oberfläche aufweist, sondern zumindest auch ein Gestaltungselement 20 enthält, optimal in der Spritzgießvorrichtung 10, 100 anzuordnen und auszurichten. Dabei wird die Position bzw. Form bzw. Ausrichtung des Gestaltungselements 20 als Referenz verwendet, um das Dekorelement 14 vor dem Spritzgießen, insbesondere vor dem Hinterspritzen mit Spritzgussmaterial, korrekt in dem Formwerkzeug 16 zu positionieren. Das Dekorelement 14 kann beispielsweise ein Textil aus natürlichen oder/und künstlichen Fasern, eine (Kunststoff-)Folie, ein Lederstück, ein Kunstlederstück oder dergleichen sein. Das fertige Spritzgussteil 42, insbesondere ein mit Spritzgussmasse 40 hinterspritztes Dekorelement 14 kann Teil einer Verkleidung eines Innenraums eines Kraftfahrzeugs sein, beispielsweise im Bereich eines Armaturenbretts, einer Türverkleidung, einer Handauflage, eines Staufachdeckels und dergleichen.

## Patentansprüche

1. Spritzgießvorrichtung (10), die dazu eingerichtet ist, ein mit einem Dekorelement (14) versehenes Spritzgussteil (42) herzustellen, wobei das Dekorelement (14) wenigstens ein als Ziernaht oder Naht oder Prägung oder im Dekorelement integriertes Emblem ausgebildetes Gestaltungselement (20) aufweist, und wobei die Spritzgießvorrichtung (10) umfasst:
eine Formkavität (12), in der das Dekorelement (14) anordenbar ist;
ein Formwerkzeug (16) mit wenigstens zwei relativ zueinander beweglichen Werkzeugelementen (16m, 16s), insbesondere einem Stempel und einer Matrize, um das Formwerkzeug (16) zu öffnen und zu schließen;
eine Füllvorrichtung (18), die dazu eingerichtet ist, bei geschlossenem oder teilweise geschlossenem Formwerkzeug (16) eine Spritzgussmasse (40) in die Formkavität (12) einzufüllen;
eine erste Fixiervorrichtung (28), die dazu eingerichtet ist, das Dekorelement (14) außerhalb eines Bereichs, der das Gestaltungselement (20) aufweist, zu fixieren;
ein Zuführelement (32), das dazu eingerichtet ist, das Dekorelement (14) in das geöffnete Formwerkzeug (16) einzuführen und das Dekorelement (14) relativ zu dem Formwerkzeug (16) in einer Sollposition (SP) auszurichten,
**dadurch gekennzeichnet, dass** sie eine zweite Fixiervorrichtung (30) aufweist, die dazu eingerichtet ist, das Dekorelement (14) im Bereich des Gestaltungselements (20) zu fixieren, wobei die zweite Fixiervorrichtung (30) einen dem Dekorelement (14) zugewandten Gegenkonturabschnitt (30g) aufweist, der dazu eingerichtet ist, mit einem Konturabschnitt (20k) des als Ziernaht oder Naht oder Prägung oder im Dekorelement integriertes Emblem ausgebildeten Gestaltungselements (20) das Dekorelement (14) formschlüssig auszurichten, wobei das Zuführelement (32) dazu eingerichtet ist, das formschlüssige Ausrichten in Bezug auf den Konturabschnitt (20k) des Gestaltungselements (20) des Dekorelements (14) mittels einer alternierenden Bewegung zu unterstützen.

2. Spritzgießvorrichtung (10) nach Anspruch 1, **dadurch gekennzeichnet, dass** die erste Fixiervorrichtung (28) wenigstens ein stempelseitiges und wenigstens ein matrizenseitiges erstes Fixierelement (28m, 28s) aufweist, die unabhängig von den Werkzeugelementen (16m, 16s) bewegbar sind.

3. Spritzgießvorrichtung (10) nach Anspruch 1 oder 2, **dadurch gekennzeichnet, dass** der zweiten Fixiervorrichtung (30) eine Vakuumeinrichtung (30a) zugeordnet ist, die insbesondere dazu eingerichtet ist, das ausgerichtete Dekorelement (14) an dem Stempel (16s) zu fixieren.

4. Spritzgießvorrichtung (10) nach Anspruch 3, **dadurch gekennzeichnet, dass** die Vakuumeinrichtung (30a) einen Einsatz (30e) aufweist, der den Gegenkonturabschnitt (30g) aufweist.

5. Spritzgießvorrichtung (10) nach Anspruch 1 oder 2, **dadurch gekennzeichnet, dass** die zweite Fixiervorrichtung (30) wenigstens ein stempelseitiges und wenigstens ein matrizenseitiges zweites Fixierelement (30m, 30s) aufweist, die unabhängig von den Werkzeugelementen (16m, 16s) bewegbar sind.

6. Spritzgießvorrichtung (10) nach Anspruch 5, **dadurch gekennzeichnet, dass** das matrizenseitige zweite Fixierelement (30m) den Gegenkonturabschnitt (30g) aufweist.

7. Spritzgießvorrichtung (10) nach einem der vorhergehenden Ansprüche, **dadurch gekennzeichnet, dass** das Zuführelement (32) mehrere Halteelemente (34), insbesondere Nadelgreifer, aufweist, die dazu eingerichtet sind, das Dekorelement (34) zu transportieren und in die Formkavität (12) einzuführen.

8. Spritzgießvorrichtung (10) nach einem der vorhergehenden Ansprüche, **dadurch gekennzeichnet, dass** das Zuführelement (32) ein elastisches Stützelement (36) aufweist, das dazu eingerichtet ist, das Gestaltungselement (20) des Dekorelements (14) insbesondere beim Ausrichten abzustützen.

9. Spritzgießvorrichtung (10) nach einem der vorhergehenden Ansprüche, **dadurch gekennzeichnet, dass** die Fixiervorrichtung (28, 30) dazu eingerichtet ist, das Dekorelement (14) beim Schließen der Werkzeugelemente (16m, 16s) und beim Einfüllen von Spritzgussmasse (40) derart zu fixieren, dass die Spritzgussmasse (40) das Dekorelement (14) nur von einer Seite (24) beaufschlagt.

10. Spritzgießvorrichtung (10) nach einem der vorhergehenden Ansprüche, **dadurch gekennzeichnet, dass** sie ferner wenigstens eine Schneidvorrichtung aufweist, die dazu eingerichtet ist, das in der Formkavität (12) aufgenommene und in der Sollposition (SP) ausgerichtete Dekorelement (14) zuzuschneiden, insbesondere dessen Randkontur zuzuschneiden

11. Spritzgießvorrichtung (10) nach einem der vorhergehenden Ansprüche, **dadurch gekennzeichnet, dass** sie ferner wenigstens eine Umbugvorrichtung (38) aufweist, die dazu eingerichtet ist, an dem in der Formkavität (12) aufgenommenen und in der Sollposition (SP) ausgerichteten Dekorelement (14) entlang von wenigstens einem seiner Ränder einen Umbug (14u) auszubilden.

12. Verfahren (500) zum Herstellen eines Spitzgussteils (42), das ein Dekorelement (14) mit wenigstens einem als Ziernaht oder Naht oder Prägung oder im Dekorelement integriertes Emblem ausgebildeten Gestaltungselement (20) aufweist, mit einer Spritzgießvorrichtung (10) gemäß einem der vorhergehenden Ansprüche, wobei das Verfahren folgende Schritte umfasst:
Einführen (S501) eines Dekorelements (14) in die Formkavität (12) bei geöffnetem Formwerkzeug (16);
Ausrichten (S502) des Dekorelements (14) relativ zu dem Formwerkzeug (16) in einer Sollposition (SP) zumindest teilweise unter Verwendung des Zuführelements (32), wobei das Ausrichten des Dekorelements (14) in der Sollposition (SP) in Abhängigkeit von einer Position oder/und Ausrichtung oder/und Formgebung des wenigstens einen als Ziernaht oder Prägung oder im Dekorelement integriertes Emblem ausgebildeten Gestaltungselements (20) durchgeführt wird;
Fixieren (S504) des Dekorelements (14) in der Sollposition (SP);
Schließen (S505) des Formwerkzeugs (16);
Einspritzen (S506), insbesondere Hinterspritzen, von Spritzgussmasse (40), derart dass die Spritzgussmasse (40) das Dekorelement (14) nur von einer Seite (24) beaufschlagt
wobei ein formschlüssiges Ausrichten in Bezug auf einen Konturabschnitt (20k) des Gestaltungselements (20) des Dekorelements (14) mittels einer alternierenden, insbesondere schwingenden Bewegung des Zuführelements (32) erfolgt (S503).

13. Verfahren nach Anspruch 12, wobei das in der Formkavität (12) eingeführte und in der Sollposition fixierte Dekorelement (14) in der Formkavität (12) vor oder nach dem Einspritzen von Spritzgussmasse (40) bearbeitet wird, insbesondere zugeschnitten wird oder/und wenigstens ein Umbug (14u) ausgebildet wird (S506).

14. Verfahren nach Anspruch 12 oder 13, wobei das zu verarbeitende Dekorelement (14)
eine zumindest teilweise flexible oder feste Struktur aufweist; oder/und
eine geschäumte Materialschicht aufweist; oder/und
eine Textilschicht oder eine Kunststoffschicht oder eine Lederschicht aufweist; oder/und
aus mehreren zusammengesetzten, insbesondere zusammengenähten Dekorstücken (14a, 14b) gebildet ist.

## Claims

1. An injection moulding device (10) which is configured to produce an injection moulded part (42) provided with a decorative element (14), wherein the decorative element (14) has at least one design element (20) designed as a decorative seam or seam or embossing or emblem integrated in the decorative element, and wherein the injection moulding device (10) comprises:
a mould cavity (12) in which the decorative element (14) can be arranged;
a mould tool (16) with at least two tool elements (16m, 16s), in particular a punch and a die, movable relative to one another in order to open and close the mould tool (16);
a filling device (18) which is configured to fill an injection moulding compound (40) into the mould cavity (12) when the mould tool (16) is closed or partially closed;
a first fixing device (28) which is configured to fix the decorative element (14) outside a region including the design element (20);
a feed element (32) which is configured to introduce the decorative element (14) into the open mould tool (16) and to align the decorative element (14) relative to the mould tool (16) in a desired position (SP), **characterised in that** it has a second fixing device (30) which is configured to fix the decorative element (14) in the region of the design element (20), wherein the second fixing device (30) has a counter-contour portion (30g) facing the decorative element (14) which is configured to align the decorative element (14) in a form-fitting manner with a contour portion (20k) of the design element (20) designed as a decorative seam or seam or embossing or emblem integrated in the decorative element, wherein the feed element (32) is configured to support the form-fitting alignment in relation to the contour portion (20k) of the design element (20) of the decorative element (14) by means of an alternating movement.

2. The injection moulding device (10) according to claim 1, **characterised in that** the first fixing device (28) has at least one punch-side and at least one die-side first fixing element (28m, 28s) which are movable independently of the tool elements (16m, 16s).

3. The injection moulding device (10) according to claim 1 or 2, **characterised in that** the second fixing device (30) is assigned a vacuum means (30a) which is in particular configured to fix the aligned decorative element (14) on the punch (16s).

4. The injection moulding device (10) according to claim 3, **characterised in that** the vacuum means (30a) has an insert (30e) which has the counter-contour portion (30g).

5. The injection moulding device (10) according to claim 1 or 2, **characterised in that** the second fixing device (30) has at least one punch-side and at least one die-side second fixing element (30m, 30s) which are movable independently of the tool elements (16m, 16s).

6. The injection moulding device (10) according to claim 5, **characterised in that** the die-side second fixing element (30m) has the counter-contour portion (30g).

7. The injection moulding device (10) according to any one of the preceding claims, **characterised in that** the feed element (32) has a plurality of holding elements (34), in particular needle grippers, which are configured to transport the decorative element (34) and introduce it into the mould cavity (12).

8. The injection moulding device (10) according to any one of the preceding claims, **characterised in that** the feed element (32) has an elastic support element (36) which is configured to support the design element (20) of the decorative element (14), in particular during alignment.

9. The injection moulding device (10) according to any one of the preceding claims, **characterised in that** the fixing device (28, 30) is configured to fix the decorative element (14) during closing of the tool elements (16m, 16s) and during filling of injection moulding compound (40) in such a way that the injection moulding compound (40) acts on the decorative element (14) only from one side (24).

10. The injection moulding device (10) according to any one of the preceding claims, **characterised in that** it further has at least one cutting device which is configured to cut the decorative element (14) received in the mould cavity (12) and aligned in the desired position (SP), in particular to cut the edge contour thereof.

11. The injection moulding device (10) according to any one of the preceding claims, **characterised in that** it further has at least one edge folding device (38) which is configured to form an edge fold (14u) along at least one of its edges on the decorative element (14) received in the mould cavity (12) and aligned in the desired position (SP).

12. A method (500) for producing an injection moulded part (42) which has a decorative element (14) with at least one design element (20) designed as a decorative seam or seam or embossing or emblem integrated in the decorative element, using an injection moulding device (10) according to any one of the preceding claims, wherein the method comprises the following steps:
introducing (S501) a decorative element (14) into the mould cavity (12) when the mould tool (16) is open;
aligning (S502) the decorative element (14) relative to the mould tool (16) in a desired position (SP) at least partially using the feed element (32), wherein the alignment of the decorative element (14) in the desired position (SP) is carried out depending on a position or/and alignment or/and shape of the at least one design element (20) designed as a decorative seam or embossing or emblem integrated in the decorative element;
fixing (S504) the decorative element (14) in the desired position (SP);
closing (S505) the mould tool (16);
injecting (S506), in particular back-injecting, injection moulding compound (40) in such a way that the injection moulding compound (40) acts on the decorative element (14) only from one side (24),
wherein a form-fitting alignment in relation to a contour portion (20k) of the design element (20) of the decorative element (14) takes place (S503) by means of an alternating, in particular oscillating, movement of the feed element (32).

13. The method according to claim 12, wherein the decorative element (14) introduced in the mould cavity (12) and fixed in the desired position is processed in the mould cavity (12) before or after the injection of injection moulding compound (40), in particular is cut to size, or/and at least one edge fold (14u) is formed (S506).

14. The method according to claim 12 or 13, wherein the decorative element (14) to be processed
has an at least partially flexible or solid structure; or/and has a foamed material layer; or/and
has a textile layer or a plastics material layer or a leather layer; or/and
is formed from a plurality of composite, in particular sewn together, decorative pieces (14a, 14b).

## Revendications

1. Dispositif de moulage par injection (10), qui est configuré pour fabriquer une pièce moulée par injection (42) pourvue d'un élément décoratif (14), l'élément décoratif (14) présentant au moins un élément de conception (20) réalisé en tant que couture décorative ou couture ou gaufrage ou emblème intégré dans l'élément décoratif, et le dispositif de moulage par injection (10) comprenant :
une cavité de formage (12), dans laquelle l'élément décoratif (14) peut être disposé ; un outil de formage (16) comprenant au moins deux éléments d'outil (16m, 16s) mobiles l'un par rapport à l'autre, en particulier un poinçon et une matrice, pour ouvrir l'outil de formage (16) et fermer celui-ci ;
un dispositif de remplissage (18), qui est configuré pour verser une masse de moulage par injection (40) dans la cavité de formage (12) lorsque l'outil de formage (16) est fermé ou partiellement fermé ;
un premier dispositif de fixation (28), qui est configuré pour fixer l'élément décoratif (14) en dehors d'une zone qui présente l'élément de conception (20) ;
un élément d'alimentation (32), qui est configuré pour introduire l'élément décoratif (14) dans l'outil de formage (16) ouvert et pour orienter l'élément décoratif (14) par rapport à l'outil de formage (16) dans une position cible (SP),
**caractérisé en ce qu'**il présente un deuxième dispositif de fixation (30), qui est configuré pour fixer l'élément décoratif (14) dans la zone de l'élément de conception (20), le deuxième dispositif de fixation (30) présentant une section de contre-contour (30g) dirigée vers l'élément décoratif (14), qui est configurée pour aligner par coopération de forme l'élément décoratif (14) avec une section de contour (20k) de l'élément de conception (20) réalisé en tant que couture décorative ou couture ou gaufrage ou emblème intégré dans l'élément décoratif, l'élément d'alimentation (32) étant configuré pour soutenir l'alignement par coopération de forme par rapport à la section de contour (20k) de l'élément de conception (20) de l'élément décoratif (14) au moyen d'un mouvement alternatif.

2. Dispositif de moulage par injection (10) selon la revendication 1, **caractérisé en ce que** le premier dispositif de fixation (28) présente au moins un premier élément de fixation côté poinçon et au moins un premier élément de fixation côté matrice (28m, 28s), qui sont mobiles indépendamment des éléments d'outil (16m, 16s).

3. Dispositif de moulage par injection (10) selon la revendication 1 ou 2, **caractérisé en ce qu'**est associé au deuxième dispositif de fixation (30) un système de vide (30a), qui est configuré en particulier pour fixer l'élément décoratif (14) aligné sur le poinçon (16s).

4. Dispositif de moulage par injection (10) selon la revendication 3, **caractérisé en ce que** le système de vide (30a) présente un insert (30e) qui présente la section de contre-contour (30g).

5. Dispositif de moulage par injection (10) selon la revendication 1 ou 2, **caractérisé en ce que** le deuxième dispositif de fixation (30) présente au moins un deuxième élément de fixation côté poinçon et au moins un deuxième élément de fixation côté matrice (30m, 30s), qui sont mobiles indépendamment des éléments d'outil (16m, 16s).

6. Dispositif de moulage par injection (10) selon la revendication 5, **caractérisé en ce que** le deuxième élément de fixation côté matrice (30m) présente la section de contre-contour (30g).

7. Dispositif de moulage par injection (10) selon l'une des revendications précédentes, **caractérisé en ce que** l'élément d'alimentation (32) présente plusieurs éléments de maintien (34), en particulier des pinces à aiguilles, qui sont configurés pour transporter l'élément décoratif (34) et pour l'introduire dans la cavité de formage (12).

8. Dispositif de moulage par injection (10) selon l'une des revendications précédentes, **caractérisé en ce que** l'élément d'alimentation (32) présente un élément de soutien élastique (36), qui est configuré pour soutenir l'élément de conception (20) de l'élément décoratif (14), en particulier lors de l'alignement.

9. Dispositif de moulage par injection (10) selon l'une des revendications précédentes, **caractérisé en ce que** le dispositif de fixation (28, 30) est configuré pour fixer l'élément décoratif (14) lors de la fermeture des éléments d'outil (16m, 16s) et lors du versement de la masse de moulage par injection (40) de telle sorte que la masse de moulage par injection (40) n'agisse sur l'élément décoratif (14) que d'un seul côté (24).

10. Dispositif de moulage par injection (10) selon l'une des revendications précédentes, **caractérisé en ce qu'**il présente en outre au moins un dispositif de coupe, qui est configuré pour découper l'élément décoratif (14) reçu dans la cavité de formage (12) et aligné dans la position cible (SP), en particulier pour découper le contour de bord de celui-ci.

11. Dispositif de moulage par injection (10) selon l'une des revendications précédentes, **caractérisé en ce qu'**il présente en outre au moins un dispositif de repliement (38), qui est configuré pour réaliser un repli (14u) le long d'au moins un de ses bords sur l'élément décoratif (14) reçu dans la cavité de formage (12) et aligné dans la position cible (SP).

12. Procédé (500) pour fabriquer une pièce moulée par injection (42), qui présente un élément décoratif (14) comprenant au moins un élément de conception (20) réalisé en tant que couture décorative ou couture ou gaufrage ou emblème intégré dans l'élément décoratif, avec un dispositif de moulage par injection (10) selon l'une des revendications précédentes, le procédé comprenant les étapes suivantes :
introduire (S501) un élément décoratif (14) dans la cavité de formage (12) lorsque l'outil de formage (16) est ouvert ;
orienter (S502) l'élément décoratif (14) par rapport à l'outil de formage (16) dans une position cible (SP) au moins partiellement à l'aide de l'élément d'alimentation (32), l'orientation de l'élément décoratif (14) dans la position cible (SP) est mise en œuvre en fonction d'une position et/ou d'un alignement et/ou d'une mise en forme de l'au moins un élément de conception (20) réalisé en tant que couture décorative ou gaufrage ou emblème intégré dans l'élément décoratif ;
fixer (S504) l'élément décoratif (14) dans la position cible (SP) ;
fermer (S505) l'outil de formage (16) ;
injecter (S506), en particulier injecter par l'arrière, une masse de moulage par injection (40) de telle sorte que la masse de moulage par injection (40) n'agisse sur l'élément décoratif (14) que d'un seul côté (24), un alignement par coopération de forme (S503) par rapport à une section de contour (20k) de l'élément de conception (20) de l'élément décoratif (14) s'effectuant au moyen d'un mouvement alternatif de l'élément d'alimentation (32), en particulier vibrant.

13. Procédé selon la revendication 12, dans lequel l'élément décoratif (14) introduit dans la cavité de formage (12) et fixé dans la position cible est usiné dans la cavité de formage (12) avant ou après l'injection de masse de moulage par injection (40), en particulier découpé ou/et au moins un repli (14u) est réalisé (S506).

14. Procédé selon la revendication 12 ou 13, dans lequel l'élément décoratif (14) à traiter
présente une structure au moins partiellement flexible ou rigide ; et/ou
présente une couche de matériau moussé ; et/ou
présente une couche textile ou une couche plastique ou une couche de cuir ; et/ou
est formé de plusieurs pièces décoratives (14a, 14b) assemblées ensemble, en particulier cousues.
